# EUROPEAN PATENT APPLICATION

(11) **EP 4 682 596 A1**
(43) Date of publication of application: **21.01.2026**
(21) Application number: 24774244.8
(22) Date of filing: 22.03.2024
(51) Int. Cl.: G02B 6/00, F21V 8/00, G09F 9/30, F21Y 105/00

(54) **LIGHT GUIDE STRUCTURE, BACKLIGHT MODULE, DISPLAY SCREEN, AND HOUSEHOLD APPLIANCE**

(30) Priority: 23.03.2023 CN 202320592527 U; 23.03.2023 CN 202320592587 U
(71) Applicant: Wuhu Midea Smart Kitchen Appliance Manufacturing Co., Ltd., Wuhu, Anhui 241000 (CN)
(72) Inventor: LIU, Linfeng, Wuhu, Anhui 241000 (CN); HE, Chunyan, Wuhu, Anhui 241000 (CN); WU, Qijun, Wuhu, Anhui 241000 (CN); ZHANG, Jian, Wuhu, Anhui 241000 (CN); GAO, Jianjian, Wuhu, Anhui 241000 (CN); ZHANG, Lixiao, Wuhu, Anhui 241000 (CN)
(74) Representative: RGTH
(86) International application number: PCT/CN2024/083179
(87) International publication number: WO 2024/193680

(57) **Abstract**

Embodiments of the present disclosure provide a light guide structure, a backlight module, a display screen, and a household appliance. The light guide structure includes: a light guide plate having at least two backlight regions arranged at intervals in an extension direction of the light guide plate; at least two light concentrators corresponding in one-to-one way to the at least two backlight regions and located in the at least two backlight regions; and at least two light-shield components corresponding in one-to-one way to the at least two backlight regions and surrounding the at least two backlight regions.

## Description

### CROSS-REFERENCE TO RELATED APPLICATIONS

This application claims priority to Chinese Patent Applications No. 202320592527.2, filed on March 23, 2023 and entitled "DISPLAY MODULE, DISPLAY PANEL, AND HOUSEHOLD APPLIANCE" and No. 202320592587.4, filed on March 23, 2023 and entitled "LIGHT GUIDE STRUCTURE, BACKLIGHT MODULE, DISPLAY SCREEN, AND HOUSEHOLD APPLIANCE", the entire contents of which are incorporated herein in their entireties by reference.

### FIELD

The present disclosure relates to the field of display technologies, and in particular, to a light guide structure, a backlight module, a display screen, and a household appliance.

### BACKGROUND

In a related technical solution, due to a limited thickness space, display backlights used in a dishwasher usually are thin edge-lit backlights.

The dishwasher is designed with many interactive functions. The edge-lit backlight is required to be divided into a plurality of regions, and each region is utilized to realize independent function control.

However, each of the plurality of regions needs to be equipped with a light guide plate, which undoubtedly increases assembly difficulty and complexity during assembly of the dishwasher, leading to an increase in production costs.

### SUMMARY

The present disclosure aims to at least solve one of the technical problems in the

### related art.

To this end, embodiments according to a first aspect of the present disclosure are to provide a light guide structure.

Embodiments according to a second aspect of the present disclosure are to provide a backlight module.

Embodiments according to a third aspect of the present disclosure are to provide a display screen.

Embodiments according to a fourth aspect of the present disclosure are to provide a display module.

Embodiments according to a fifth aspect of the present disclosure are to provide a display panel.

Embodiments according to a sixth aspect of the present disclosure are to provide a household appliance.

In view of this, according to the embodiments in the first aspect of the present disclosure, a light guide structure is provided. The light guide structure comprises: a light guide plate having at least two backlight regions arranged at intervals in an extension direction of the light guide plate; at least two light concentrators corresponding in one-to-one way to the at least two backlight regions and located in the at least two backlight regions; and at least two light-shield components corresponding in one-to-one way to the at least two backlight regions and surrounding the at least two backlight regions.

In the light guide structure according to the embodiments of the present disclosure, the light guide plate has the at least two backlight regions, and the backlight regions are surrounded by the light-shield components to reduce light leakage at the backlight regions.

In this case, one light guide plate is divided to have at least two backlight regions, and a plurality of light guide plates in the related art are replaced with a light guide assembly according to the embodiments of the present disclosure. In this way, there is no need to mount the light guide plates one by one based on the number of regions divided by backlight. Therefore, complexity in mounting the light guide plates is reduced. Meanwhile, the light guide structure according to the embodiments of the present disclosure may be formed by single processing without separate processing one by one. Therefore, the number of processing times is also reduced, lowering manufacturing cost of the light guide structure.

In the embodiments of the present disclosure, the backlight regions may be understood as regions divided from the light guide plate for backlighting purposes.

In the embodiments of the present disclosure, the light concentrators may function to concentrate lights. Therefore, an amount of the lights concentrated in the backlight region can be increased, improving brightness of the backlight.

In some embodiments of the present disclosure, in the extension direction of the light guide plate, a spacing between any two adjacent backlight regions of the at least two backlight regions are the same, i.e., the at least two backlight regions are arranged regularly.

In some embodiments of the present disclosure, in the extension direction of the light guide plate, the spacing between any two adjacent backlight regions of the at least two backlight regions are different, and may be set as desired.

In some embodiments of the present disclosure, the extension direction of the light guide plate may be understood as a length direction of the light guide plate.

In addition, the light guide structure according to the embodiments of the present disclosure further has the following additional technical features.

In the embodiments of the present disclosure, each of the at least two backlight regions has a first operation surface and a second operation surface opposite to the first operation surface. The at least two light concentrators are arranged on the first operation surface and/or the second operation surface.

In the embodiments of the present disclosure, the first operation surface may be understood as a side facing towards a user, and correspondingly the second operation surface is a side facing away from the user.

When the light concentrators are arranged at the side facing towards the user, brightness at the backlight regions of the light guide structure is increased. Therefore, a display effect in a backlight environment can be improved.

In the embodiments of the present disclosure, when the light concentrators are arranged at the side facing away from the user, a probability that the light concentrators are in contact with environmental dust can be reduced, reducing a frequency of cleaning the light guide structure.

In addition, when the light concentrators are arranged at both the first operation surface and the second operation surface, processing difficulty of the light guide structure can be reduced, which in turn can increase a yield rate of the light guide structure. In addition, a thickness of the light guide structure can also be reduced to reduce a space occupied by the light guide structure.

In any one of the above embodiments, the light guide structure has a light-emitting element configured to be cooperatively used with the light guide structure. The light-emitting element has a light-emitting direction. Each of the at least two light concentrators comprises a plurality of light concentration units sequentially arranged in the extension direction of the light guide plate. An extension direction of each of the plurality of light concentration units is the same as the light-emitting direction.

In the embodiments of the present disclosure, a detailed structure of the light concentrator is defined. For example, the light concentrator is divided into the plurality of light concentration units to perform light concentration on light incident into the light concentrator using the plurality of light concentration units.

In this case, the occurrence of a case where the light converges together can be reduced by means of the plurality of light concentration units, i.e., brightness at a local position in the backlight region is significantly higher than brightness at other positions. Therefore, evenness of light emission from the backlight region is improved to ensure the display effect.

In addition, by defining the extension direction of each light concentration unit to be the same as the light-emitting direction, lights emitted by the light-emitting element may be incident into the light concentration units, which can realize the light concentration effect by the light concentration units.

In the embodiments of the present disclosure, since the light concentration units are sequentially arranged, the backlight provided at the backlight regions may be continuous. Therefore, unevenness of the backlight provided at the backlight regions can be reduced.

In the embodiments of the present disclosure, the extension direction being the same as the light-emitting direction may be understood as the extension direction being parallel to the light-emitting direction, or an angle within a predetermined angle range may be formed between the extension direction and the light-emitting direction.

In the embodiments of the present disclosure, the extension direction of each of the plurality of light concentration units may be understood as a width direction of the light guide plate.

For example, the predetermined angle range may be from 0° to 10°.

In some embodiments of the present disclosure, a shape of each of the plurality of light concentration units is a strip-shaped arc.

In some embodiments of the present disclosure, the plurality of light concentration units have the same dimension.

In the embodiments of the present disclosure, by designing the plurality of light concentration units to have the same dimension, the manufacturing difficulty of the light guide structure is reduced.

In some embodiments of the present disclosure, the plurality of light concentration units having the same dimension may mean that a plurality of light concentration units in one backlight region have the same dimension, or that a plurality of light concentration units in different backlight regions have the same dimension.

In any one of the above embodiments of the present disclosure, a length of each of the plurality of light concentration units in the extension direction of the light guide plate ranges from 0.2 mm to 0.5 mm.

In the embodiments of the present disclosure, the dimension of each of the plurality of light concentration units is defined, and the extension direction of the light guide plate may be understood as a width of each light concentration unit.

As the width of each light concentration unit becomes smaller and smaller, the processing difficulty of the light guide structure increases gradually. By defining the width of each light concentration unit to be greater than 0.2 mm, excessively high processing difficulty of the light guide structure due to excessively high processing difficulty, which would otherwise affect processing costs of the light guide structure, can be avoided.

In the embodiments of the present disclosure, by defining the width of each light concentration unit to be smaller than 0.5 mm, the occurrence of obvious light and dark stripes in the backlight region due to an excessively large width, which would otherwise affect light emission effect, can be avoided.

In any one of the above embodiments of the present disclosure, the plurality of light concentration units are stacked on the light guide plate. A length of each of the plurality of light concentration units in a direction along which the plurality of light concentration units are stacked on the light guide plate ranges from 50 µm to 100 µm.

In the embodiments of the present disclosure, the length of each light concentration unit in the stacking direction may be understood as a height of each light concentration unit. By defining the height of each light concentration unit to range from 50 µm to 100 µm, the excessively high processing difficulty of the light guide structure due to an excessively larger height of each light concentration unit, which would otherwise result in excessively high processing cost of the light guide structure, can be avoided. Meanwhile, a yield rate of the processing is prevented from being affected due to the excessively high processing difficulty.

In the embodiments of the present disclosure, by defining the height of each light concentration unit to be higher than or equal to 50 µm, the light concentration effect and thus display brightness at the backlight region are prevented from being affected by an excessively low height of each light concentration unit.

In some embodiments of the present disclosure, the height of each light concentration unit may be 70 µm or 80 µm, or may be selected as desired.

In any one of the above embodiments of the present disclosure, the plurality of light concentration units are stacked on the light guide plate. A length of the light guide plate in a direction along which the plurality of light concentration units are stacked on the light guide plate ranges from 0.5 mm to 1 mm.

In the embodiments of the present disclosure, the length of the light guide plate in the stacking direction may be understood as a thickness of the light guide plate. In the embodiments of the present disclosure, by defining the thickness of the light guide plate to be greater than or equal to 0.5 mm, a strength of the light guide plate is ensured, and a structural strength of the light guide plate itself is prevented from being affected by an excessively thin light guide plate, which would otherwise result in breakage of the light guide plate.

By defining the thickness of the light guide plate to be smaller than or equal to 1 mm, the light guide plate is prevented from being too thick, which would otherwise result in an increase in production cost of the light guide plate. Meanwhile, a space occupied by the light guide plate is reduced, making the light guide structure lighter and thinner.

In any one of the above embodiments of the present disclosure, each of the at least two light-shield components comprises a first shield member located between two adjacent backlight regions of the at least two backlight regions and second shield members arranged at two sides of each of the at least two backlight regions in the extension direction of each light concentration unit.

In the embodiments of the present disclosure, the light-shield component is divided into the first shield member and the second shield members. The first shield member is used to shield light between two adjacent backlight regions to prevent light from a first backlight region of the two adjacent backlight regions from irradiating to a second backlight region of the two adjacent backlight regions, which would otherwise result in light crosstalk and affect a lighting effect at the backlight regions of the light guide structure.

The second shield members 1084 are used to prevent light crosstalk between the backlight regions and an edge of the light guide plate. By dividing the light-shield component into two parts and assembling the two parts together, the assembly difficulty of the light guide structure is reduced.

In any one of the above embodiments of the present disclosure, a length of the first shield member in the extension direction of the light guide plate ranges from 1 mm to 5 mm.

In the embodiments of the present disclosure, the length of the first shield member may be understood as a width between two adjacent backlight regions. In the embodiments of the present disclosure, by defining the width between the two adjacent backlight regions to be greater than 1 mm, a sufficient space is provided between the two adjacent backlight regions to avoid the light crosstalk between the two adjacent backlight regions.

In the embodiments of the present disclosure, by defining the width between the two adjacent backlight regions to be smaller than 5 mm, waste of the light guide plate due to an excessively wide first shield member can be avoided. Meanwhile, a use amount of the first shield member is reduced, lowering the manufacturing cost of the light guide structure.

In any one of the above embodiments of the present disclosure, a length of each of the second shield members in the extension direction of each light concentration unit ranges from 1 mm to 3 mm.

In the embodiments of the present disclosure, the length of the second shield member may be understood as a distance between the backlight region and the edge of the light guide plate. In the embodiments of the present disclosure, by defining the distance between the backlight region and the edge of the light guide plate to be greater than 1 mm, a sufficient space is left to prevent the light crosstalk from the backlight region to the edge of the light guide plate.

In the embodiments of the present disclosure, by defining the distance between the backlight region and the edge of the light guide plate to be smaller than 3 mm, the waste of the light guide plate due to an excessively wide second shield member can be avoided. Meanwhile, a use amount of the second shield member is reduced, lowering the manufacturing cost of the light guide structure.

According to embodiments of the second aspect of the present disclosure, a backlight module is provided. The backlight module comprises the light guide structure as described according to any one of the above embodiments.

In the embodiments of the present disclosure, the backlight module further comprises a light-emitting element arranged to face towards the light guide plate of the light guide structure.

In the embodiments of the present disclosure, the light-emitting element is configured to be cooperatively used with the light guide structure to form an edge-lit backlight module.

In the embodiments of the present disclosure, the light-emitting element may be a semiconductor light-emitting device, such as a light-emitting diode.

According to embodiments of the third aspect of the present disclosure, a display screen is provided. The display screen comprises the backlight module according to any one of the above embodiments.

In the embodiments of the present disclosure, the display screen further comprises a color filter stacked on the backlight module.

In the embodiments of the present disclosure, a pattern is printed or etched on the color filter. When the color filter is stacked on the backlight module, the backlight module is capable of providing a light source for the color filter to illuminate the pattern on the color filter, realizing display.

In the embodiments of the present disclosure, the pattern printed or etched on the color filter is associated with a predetermined display content on the display screen, and may be printed or etched as desired. A description of the specific pattern is omitted herein.

In any one of the above embodiments of the present disclosure, the display screen further comprises at least two touch controls corresponding in one-to-one way to the at least two backlight regions of the backlight module.

In the embodiments of the present disclosure, since the at least two touch controls correspond in one-to-one way to the at least two backlight regions, it is convenient for the user to realize the selection of a function corresponding to the backlight region through a touch control operation on the touch controls, i.e., realize touch control of the display screen.

In some embodiments of the present disclosure, each of the at least two touch controls may be a touch capacitor, and details thereof are omitted herein.

According to embodiments of the fourth aspect of the present disclosure, a display module is provided. The display module comprises at least two light-emitting sources, a color filter sheet, and a grating sheet. A plurality of patterns are distributed on the color filter sheet, and are pieced together to form at least two combined patterns. The grating sheet is located between the at least two light-emitting sources and the color filter sheet. When a target light-emitting source of the at least two light-emitting sources operates, emitted lights are refracted by the grating sheet and then irradiate the color filter sheet, and thus a target pattern of the at least two combined patterns is displayed after being irradiated.

In the display module according to the embodiments of the present disclosure, different combined patterns may be displayed by one color filter sheet, and accordingly more contents may be displayed with a limited display size, to solve problems in related technical solutions where an excessive number of function options lead to a large number of blocks of the color filter, a large area of the color filter, and high space occupancy, which would otherwise provide poor interactive experience.

Embodiments of the present disclosure are implemented based on the following principle. In an exemplary embodiment of the present disclosure, when different light-emitting sources operate, emitted lights from the different light-emitting sources are refracted by the grating sheet and then irradiate different positions on the color filter sheet. When the lights irradiate the color filter, patterns at the illuminated positions on the color filter sheet are lit up, and the lit patterns may form combined patterns. Each combined pattern is used to represent one function option.

It can be seen from the above that as the number of light-emitting sources increases and the number of patterns provided on the color filter sheet increases, the display module according to the embodiments of the present disclosure may display more function options. Therefore, it is possible to realize display of more function options without increasing the display size, or reduce the display size while ensuring the number of displayed function options, to satisfy display requirements in different use scenarios.

In the embodiments of the present disclosure, the grating sheet is capable of changing a light exit direction of the light incident into the grating sheet. While realizing light concentration, patterns at the different positions on the color filter sheet may be selectively illuminated, which in turn can realize that the combined pattern is obtained by combining the patterns at different positions.

In the embodiments of the present disclosure, the at least two light-emitting sources are arranged at intervals. The patterns on the color filter sheet are sequentially arranged. An arrangement direction of the at least two light-emitting sources is the same as an arrangement direction of the patterns on the color filter sheet. The grating sheet is located between the at least two light-emitting sources and the color filter sheet.

In addition, the display module according to the embodiments of the present disclosure further has the following additional technical features.

In the embodiments of the present disclosure, the grating sheet comprises at least two lenses, and the at least two lenses, the at least two light-emitting sources, and the at least two combined patterns correspond in one-to-one way to one another.

In the embodiments of the present disclosure, a specific composition of the grating sheet is defined. By defining the lenses contained in the grating sheet to correspond in one-to-one way to the at least two light-emitting sources and the combined patterns formed by piecing the patterns, during actual use, one of the at least two light-emitting sources may be controlled to operate while the others are controlled not to operate, to realize display of one combined pattern of the at least two combined patterns.

In the embodiments of the present disclosure, the at least two lenses and the at least two light-emitting sources may be understood as positions of the at least two lenses corresponding in one-to-one way to positions of the at least two light-emitting sources. In this way, when one of the at least two light-emitting sources emits lights, the lights can be refracted by the at least two lenses and then irradiate a corresponding position on the color filter sheet. After the pattern at the corresponding position on the color filter sheet are lit up, the patterns may be combined to form a combined pattern.

In the embodiments of the present disclosure, the function option may be selected as desired, and its corresponding light-emitting source may be controlled to emit lights to display the desired function option.

In any one of the above embodiments of the present disclosure, the lens comprises a film with a circular protrusion at one side of the film, and circular protrusions of any two films have the same orientation.

In the embodiments of the present disclosure, the form of the lens is specifically defined. In this case, by defining the lens to be the film with the circular protrusion at one side of the film and replacing a glass lens with such a lens, the use of the glass lens is reduced while realizing the light refraction. Therefore, a volume and weight of the display module can be reduced, achieving lightweight of the display module.

In some embodiments of the present disclosure, the film may be a thermoplastic polyester film.

In the embodiments of the present disclosure, by defining the circular protrusions of any two films to have the same orientation, at least two films are integrated. Therefore, during the assembly of the display module, assembly difficulty of the display module is reduced.

In the embodiments of the present disclosure, the circular protrusion faces towards a side of the light-emitting source.

In the embodiments of the present disclosure, by defining the circular protrusion to face towards the side of the light-emitting source, a side facing away from the circular protrusion may be formed as a relatively flat array and is arranged to face towards the color filter sheet.

In addition, since the circular protrusion faces towards the side of the light-emitting source, a focal point of the grating sheet may be easily set at a side of the color filter sheet, achieving uniform light emission.

In any one of the above embodiments of the present disclosure, the at least two light-emitting sources comprise a plurality of groups of light-emitting units, and each of the at least two light-emitting sources comprises at least one group of light-emitting units. Two adjacent light-emitting units of the plurality of groups of light-emitting units are arranged at intervals.

In the embodiments of the present disclosure, structures of the at least two light-emitting sources are defined. In the embodiments of the present disclosure, the plurality of groups of light-emitting units may be divided into groups to form different light-emitting sources. In this case, an existing light-emitting matrix may be divided to obtain a plurality of groups of light-emitting units, to realize centralized control on the at least two light-emitting sources, simplifying control cost of the display module.

In the embodiments of the present disclosure, by arranging two adjacent light-emitting units at intervals, interference caused by lights emitted by the different light-emitting sources during their operation is reduced, to improve a display effect of the combined pattern.

In some embodiments of the present disclosure, the number of groups of light-emitting units contained in the different light-emitting sources is the same.

In the embodiments of the present disclosure, by defining the number of groups of light-emitting units contained in the different light-emitting sources to be the same, the lights emitted by the different light-emitting sources are nearly the same, ensuring that brightness of the displayed combined patterns is similar, to ensure user experience of the display module.

In any one of the above embodiments of the present disclosure, a thickness of the color filter sheet ranges from 0.1 mm to 0.3 mm; and/or a thickness of the grating sheet ranges from 0.2 mm to 0.6 mm; and/or a distance between the at least two light-emitting sources and the grating sheet ranges from 5 mm to 20 mm.

In the embodiments of the present disclosure, a plurality of patterns are distributed on the color filter sheet. By defining the thickness of the color filter sheet to be greater than or equal to 0.1 mm, the color filter sheet is prevented from being easily deformed due to its excessively small thickness, which would otherwise reduce its mechanical strength and result in easy damage of the display module. By defining the thickness of the color filter sheet to be smaller than or equal to 0.3 mm, manufacturing cost of the display module are prevented from increasing due to an excessively thick color filter sheet.

By defining the thickness of the grating sheet to range from 0.2 mm and 0.6 mm, it is possible to avoid the restriction that the size of the color filter sheet should not be excessively large due to an excessively thin grating sheet, to prevent the display module from becoming excessively thick caused by an excessively thick grating sheet.

Similarly, when the distance between the at least two light-emitting sources and the grating sheet is smaller than 5 mm, the size of the color filter sheet is restricted from being excessively large; whereas when the distance between the at least two light-emitting sources and the grating sheet is greater than 20 mm, the display module becomes excessively thick.

In any one of the above embodiments of the present disclosure, the display module further comprises a diffuser sheet. The diffuser sheet is stacked on the color filter sheet, and is located at a side away from the grating sheet.

In the embodiments of the present disclosure, the diffuser sheet is provided to perform a light homogenization operation on the lights diffused from the combined pattern, making the displayed combined patterns softer and further ensuring a viewing experience of the display module.

In some embodiments of the present disclosure, the diffuser sheet may be any one of a diffuser sheet made of polyethylene glycol terephthalate (PET), a diffuser sheet made of polycarbonate (PC), or a diffuser sheet made of polymethyl methacrylate (PMMA).

In any one of the above embodiments of the present disclosure, a thickness of the diffuser sheet ranges from 0.05 mm to 0.15 mm.

In the embodiments of the present disclosure, by defining the thickness of the diffuser sheet to be greater than or equal to 0.05 mm, the occurrence of poor light homogenization effect of the diffuser sheet due to an excessively thin diffuser sheet, which would otherwise result in uneven brightness with some regions being brighter and others darker, is reduced. By defining the thickness of the diffuser sheet to be smaller than or equal to 0.15 mm, low light transmittance, an overly whitish display effect of the display module, and impaired viewing experience, which are caused by an excessively thick diffuser sheet, are avoided.

According to the embodiments of the fifth aspect of the present disclosure, a display panel is provided. The display panel comprises the display module according to any one of the above embodiments.

In the embodiments of the present disclosure, the display panel further comprises a touch control. The touch control is stacked on the color filter sheet of the display module.

In the embodiments of the present disclosure, the selection of a function option corresponding to the combined pattern is realized through the touch control operation on the touch control, i.e., touch control of the display module is realized.

In some embodiments of the present disclosure, the touch control may be located between the color filter sheet and the diffuser sheet.

In the embodiments of the present disclosure, by positioning the touch control between the color filter sheet and the diffuser sheet, direct contact between the user and the touch control is reduced, lowering a probability of touch failure of the display panel.

In some embodiments of the present disclosure, the touch control may also be located at a side of the diffuser sheet away from the color filter sheet.

In some embodiments of the present disclosure, the touch control may be the touch capacitor, and details thereof are omitted herein.

According to the embodiments of the sixth aspect of the present disclosure, a household appliance is provided. The household appliance comprises: the light guide structure according to any one of the above embodiments; and/or the backlight module according to the above embodiments; and/or the display screen according to any one of the above embodiments; and/or the display module according to any one of the above embodiments; and/or the display panel according to any one of the above embodiments.

In any one of the above embodiments of the present disclosure, the household appliance comprises a water heater.

Additional aspects and advantages of the present disclosure will be provided in part in the following description, or will become apparent in part from the following description, or can be learned from practicing of the present disclosure.

### BRIEF DESCRIPTION OF the DRAWINGS

The above and/or additional aspects and advantages of the present disclosure will become more apparent and more understandable from the following description of embodiments taken in conjunction with the accompanying drawings, in which:
FIG. 1 shows a first structural schematic view of a light guide structure according to some embodiments of the present disclosure.
FIG. 2 shows a second structural schematic view of a light guide structure according to some embodiments of the present disclosure.
FIG. 3 shows a third structural schematic view of a light guide structure according to some embodiments of the present disclosure.
FIG. 4 shows a structural schematic view of a backlight module according to some embodiments of the present disclosure.
FIG. 5 shows a structural schematic view of a display screen according to some embodiments of the present disclosure.
FIG. 6 shows a structural schematic view of a display module according to some embodiments of the present disclosure.
FIG. 7 shows an operation principal diagram of a display module according to some embodiments of the present disclosure.

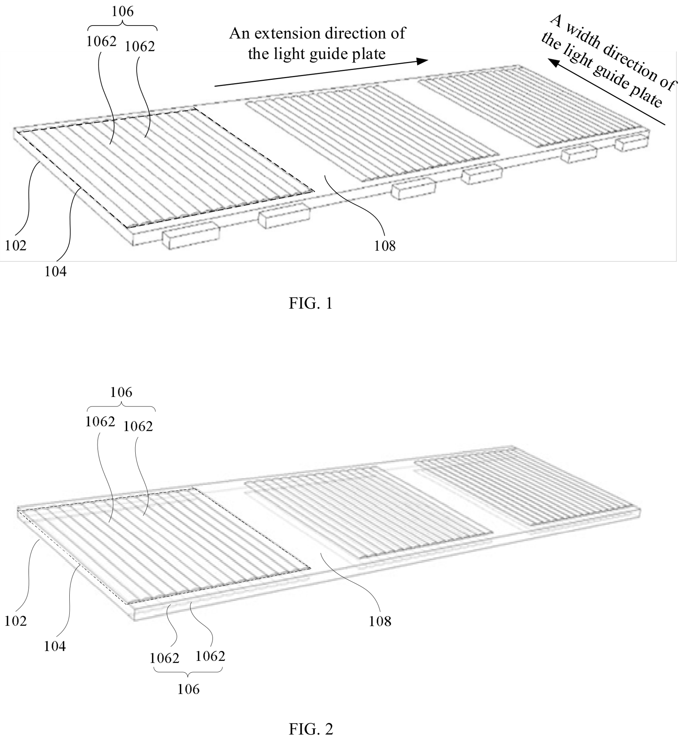

Corresponding relationships between reference numerals and component names in FIG. 1 to FIG. 6 are as follows:

102 light guide plate, 104 backlight region, 106 light concentrator, 1062 light concentration unit, 108 light-shield component, 1082 first shield member, 1084 second shield member, 200 backlight module, 202 light-emitting element, 302 color filter, 304 touch control, 402 light-emitting source, 404 color filter sheet, 406 grating sheet, 408 diffuser sheet.

### detailed DESCRIPTION

In order to more clearly understand the above aspects, features, and advantages of the present disclosure, the present disclosure will be described in further detail in combination with the accompanying drawings and specific embodiments. It should be noted that, the embodiments of the present disclosure and features in the embodiments can be combined with each other without any conflict.

In the following description, many specific details are provided to facilitate a full understanding of the present disclosure. However, the present disclosure can be implemented in other manners different from those described herein. Therefore, the scope of the present disclosure is not limited by specific embodiments disclosed below.

In an embodiment of the present disclosure, as shown in FIG. 1, FIG. 2, and FIG. 3, a light guide structure is provided. The light guide structure comprises a light guide plate 102, at least two light concentrators 106, and at least two light-shield components 108. The light guide plate 102 has at least two backlight regions 104 arranged at intervals in an extension direction of the light guide plate 102. The at least two light concentrators 106 correspond in one-to-one way to the at least two backlight regions 104 and are located in the at least two backlight regions 104. The at least two light-shield components 108 correspond in one-to-one way to the at least two backlight regions 104 and surrounding the at least two backlight regions 104.

In the light guide structure according to the embodiments of the present disclosure, the light guide plate 102 has the at least two backlight regions 104, and the backlight regions 104 are surrounded by the light-shield components 108 to reduce light leakage at the backlight regions 104.

In this case, one light guide plate 102 is divided to have at least two backlight regions 104, and a plurality of light guide plates 102 in the related art are replaced with a light guide assembly according to the embodiments of the present disclosure. In this way, there is no need to mount the light guide plates 102 one by one based on the number of regions divided by backlight. Therefore, complexity in mounting the light guide plates 102 is reduced. Meanwhile, the light guide structure according to the embodiments of the present disclosure may be formed by single processing without separate processing one by one. Therefore, the number of processing times is also reduced, lowering manufacturing cost of the light guide structure.

In the embodiments of the present disclosure, the backlight regions 104 may be understood as regions divided from the light guide plate 102 and used for the backlight.

In the embodiments of the present disclosure, the light concentrators 106 may function to concentrate lights. Therefore, an amount of the lights concentrated in the backlight regions 104 can be increased, improving brightness of the backlight.

In some embodiments of the present disclosure, in the extension direction of the light guide plate 102, a spacing between any two adjacent backlight regions 104 of the at least two backlight regions 104 are the same, i.e., the at least two backlight regions 104 are arranged regularly.

In some embodiments of the present disclosure, in the extension direction of the light guide plate 102, the spacing between any two adjacent backlight regions 104 of the at least two backlight regions 104 are different, and may be set as desired.

In some embodiments of the present disclosure, the extension direction of the light guide plate 102 may be understood as a length direction of the light guide plate 102.

In the embodiments of the present disclosure, each of the at least two backlight regions 104 has a first operation surface and a second operation surface opposite to the first operation surface. The at least two light concentrators 106 are arranged on the first operation surface and/or the second operation surface.

In the embodiments of the present disclosure, the first operation surface may be understood as a side facing towards a user, and correspondingly the second operation surface is a side facing away from the user.

When the light concentrators 106 are arranged at the side facing towards the user, brightness at the backlight regions 104 of the light guide structure is higher. Therefore, a display effect in a backlight environment can be improved.

In the embodiments of the present disclosure, when the light concentrators 106 are arranged at the side facing away from the user, a probability that the light concentrators 106 are in contact with environmental dust can be reduced, reducing a frequency of cleaning the light guide structure.

In addition, when the light concentrators 106 are arranged at both the first operation surface and the second operation surface, processing difficulty of the light guide structure can be reduced, which in turn can increase a yield rate of the light guide structure. In addition, a thickness of the light guide structure can also be reduced to reduce a space occupied by the light guide structure.

In some embodiments of the present disclosure, each of the light-shield components 108 is a shielding coating that covers a surface of the light guide plate 102.

The shielding coating is prepared by printing and/or spraying.

In any one of the above embodiments, the light guide structure has a light-emitting element 202 configured to be cooperatively used with the light guide structure. The light-emitting element 202 has a light-emitting direction. Each of the at least two light concentrators 106 comprises a plurality of light concentration units 1062 sequentially arranged in the extension direction of the light guide plate 102. An extension direction of each of the plurality of light concentration units 1062 is the same as the light-emitting direction.

In the embodiments of the present disclosure, detailed structures of the light concentrators 106 are defined. For example, the light concentrators 106 are divided into the plurality of light concentration units 1062 to perform light concentration on light incident into the light concentrators 106 using the plurality of light concentration units 1062.

In this case, the occurrence of a case where the light converges together can be reduced by means of the plurality of light concentration units 1062, i.e., brightness at a local position in the backlight regions 104 is significantly higher than brightness at other positions. Therefore, evenness of light emission from the backlight regions 104 is improved to ensure the display effect.

In addition, by defining the extension direction of each of the light concentration units 1062 to be the same as the light-emitting direction, lights emitted by the light-emitting element 202 may be incident into the light concentration units 1062, which can realize the light concentration effect by the light concentration units 1062.

In the embodiments of the present disclosure, since the light concentration units 1062 are sequentially arranged, the backlight provided at the backlight regions 104 may be continuous. Therefore, unevenness of the backlight provided at the backlight regions 104 can be reduced.

In the embodiments of the present disclosure, the extension direction being the same as the light-emitting direction may be understood that the extension direction may be parallel to the light-emitting direction, or an angle within a predetermined angle range may be formed between the extension direction and the light-emitting direction.

In some embodiments of the present disclosure, the extension direction of each light concentration unit 1062 may be understood as a width direction of the light guide plate 102.

For example, the predetermined angle range may be from 0° to 10°.

In some embodiments of the present disclosure, a shape of each light concentration unit 1062 is a strip-shaped arc.

In some embodiments of the present disclosure, the plurality of light concentration units 1062 have the same dimension.

In the embodiments of the present disclosure, by designing the plurality of light concentration units 1062 to have the same dimension, the manufacturing difficulty of the light guide structure is reduced.

In some embodiments of the present disclosure, the plurality of light concentration units 1062 having the same dimension may mean that a plurality of light concentration units 1062 in one backlight region 104 have the same dimension, or that a plurality of light concentration units 1062 in different backlight regions 104 have the same dimension.

In any one of the above embodiments of the present disclosure, a length a of each of the plurality of light concentration units 1062 in the extension direction of the light guide plate 102 ranges from 0.2 mm to 0.5 mm.

In the embodiments of the present disclosure, the dimension of each of the light concentration units 1062 is defined, and the extension direction of the light guide plate 102 may be understood as a width of each light concentration unit 1062.

As the width of each light concentration unit 1062 becomes smaller and smaller, the processing difficulty of the light guide structure increases gradually. By defining the width of each light concentration unit 1062 to be greater than 0.2 mm, excessively high processing difficulty of the light guide structure due to excessively high processing difficulty, which would otherwise affect processing costs of the light guide structure, can be avoided.

In the embodiments of the present disclosure, by defining the width of each light concentration unit 1062 to be smaller than 0.5 mm, the occurrence of obvious light and dark stripes in the backlight regions 104 due to an excessively large width, which would otherwise affect a light emission effect, can be avoided.

In any one of the above embodiments of the present disclosure, the plurality of light concentration units 1062 are stacked on the light guide plate 102. A length b of each of the plurality of light concentration units 1062 in a direction along which the plurality of light concentration units 1062 are stacked on the light guide plate 102 ranges from 50 µm to 100 µm.

In the embodiments of the present disclosure, the length of each light concentration unit 1062 in the stacking direction may be understood as a height of each light concentration unit 1062. By defining the height of teach light concentration unit 1062 to range from 50 µm to 100 µm, the excessively high processing difficulty of the light guide structure due to an excessively larger height of each light concentration unit 1062, which would otherwise result in excessively high processing cost of the light guide structure, can be avoided. Meanwhile, a yield rate of the processing is prevented from being affected due to the excessively high processing difficulty.

In the embodiments of the present disclosure, by defining the height of each light concentration unit 1062 to be higher than or equal to 50 µm, the light concentration effect and thus display brightness at the backlight region are prevented from being affected by an excessively low height of each light concentration unit 1062.

In some embodiments of the present disclosure, the height of each light concentration unit 1062 may be 70 µm or 80 µm, or may be selected as desired.

In any one of the above embodiments of the present disclosure, the plurality of light concentration units 1062 are stacked on the light guide plate 102. A length c of the light guide plate 102 in a direction along which the plurality of light concentration units 1062 are stacked on the light guide plate 102 ranges from 0.5 mm to 1 mm.

In the embodiments of the present disclosure, the length of the light guide plate 102 in the stacking direction may be understood as a thickness of the light guide plate 102. In the embodiments of the present disclosure, by defining the thickness of the light guide plate 102 to be greater than or equal to 0.5 mm, a strength of the light guide plate 102 is ensured, and a structural strength of the light guide plate 102 itself is prevented from being affected by an excessively thin light guide plate, which would otherwise result in breakage of the light guide plate 102.

By defining the thickness of the light guide plate 102 to be smaller than or equal to 1 mm, the light guide plate 102 is prevented from being too thick, which would otherwise result in an increase in production cost of the light guide plate 102. Meanwhile, a space occupied by the light guide plate 102 is reduced, making the light guide structure lighter and thinner.

In any one of the above embodiments of the present disclosure, each of the at least two light-shield components 108 comprises a first shield member 1082 located between two adjacent backlight regions 104 of the at least two backlight regions 104 and second shield members 1084 arranged at two sides of each of the at least two backlight regions 104 in the extension direction of each light concentration unit 1062.

In the embodiments of the present disclosure, the light-shield component is divided into the first shield member 1082 and the second shield members 1084. The first shield member 1082 is used to shield light between two adjacent backlight regions 104 to prevent lights from a first backlight region 104 of the two adjacent backlight regions 104 from irradiating a second backlight region 104 of the two adjacent backlight regions 104, which would otherwise result in light crosstalk and affect a lighting effect at the backlight regions 104 of the light guide structure.

The second shield members 1084 are used to prevent light crosstalk between the backlight regions 104 and an edge of the light guide plate 102. By dividing the light-shield component into two parts and assembling the two parts together, the assembly difficulty of the light guide structure is reduced.

In any one of the above embodiments of the present disclosure, a length d of the first shield member 1082 in the extension direction of the light guide plate 102 ranges from 1 mm to 5 mm.

In the embodiments of the present disclosure, the length of the first shield member 1082 may be understood as a width between two adjacent backlight regions 104. In the embodiments of the present disclosure, by defining the width between the two adjacent backlight regions 104 to be greater than 1 mm, a sufficient space is provided between the two adjacent backlight regions 104 to avoid the light crosstalk between the two adjacent backlight regions 104.

In the embodiments of the present disclosure, by defining the width between the two adjacent backlight regions 104 to be smaller than 5 mm, waste of the light guide plate 102 due to an excessively wide first shield member 1082 can be avoided. Meanwhile, a use amount of the first shield member 1082 is reduced, lowering the manufacturing cost of the light guide structure.

In any one of the above embodiments of the present disclosure, a length e of each of the second shield members 1084 in the extension direction of each light concentration unit 1062 ranges from 1 mm to 3 mm.

In the embodiments of the present disclosure, the length of each of the second shield members 1084 may be understood as a distance between the backlight region 104 and the edge of the light guide plate 102. In the embodiments of the present disclosure, by defining the distance between the backlight region 104 and the edge of the light guide plate 102 to be greater than 1 mm, a sufficient space is left to prevent the light crosstalk from the backlight region 104 to the edge of the light guide plate 102.

In the embodiments of the present disclosure, by defining the distance between the backlight region 104 and the edge of the light guide plate 102 to be smaller than 3 mm, the waste of the light guide plate 102 due to an excessively wide second shield member 1084 can be avoided. Meanwhile, a use amount of the second shield member 1084 is reduced, lowering the manufacturing cost of the light guide structure.

According to embodiments of the present disclosure, a backlight module 200 is provided. The backlight module 200 comprises the light guide structure as described according to any one of the above embodiments.

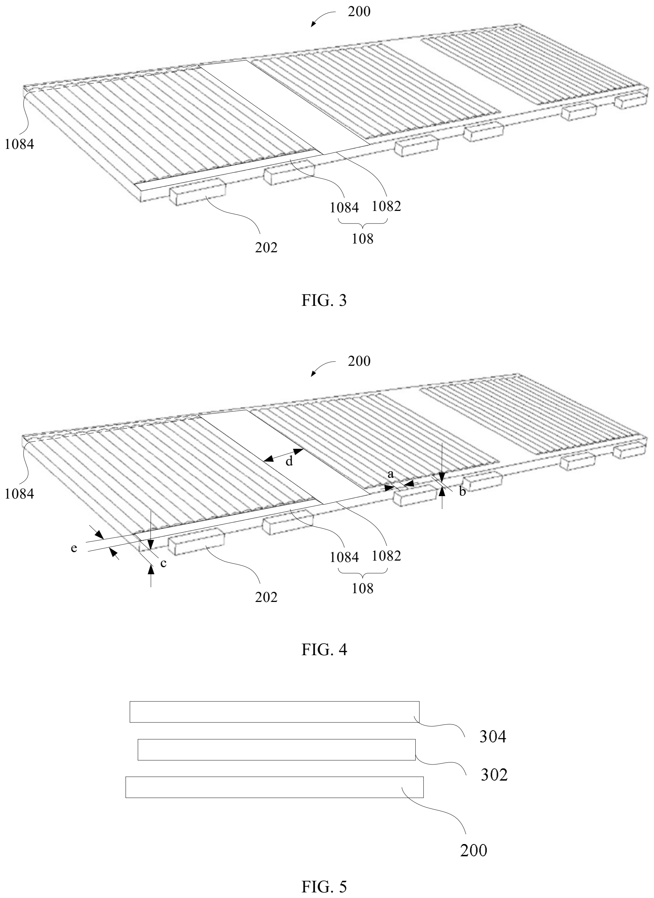

In the embodiments of the present disclosure, as shown in FIG. 4, the backlight module 200 further comprises a light-emitting element 202 arranged to face towards the light guide plate 102 of the light guide structure.

In the embodiments of the present disclosure, the light-emitting element 202 is configured to be cooperatively used with the light guide structure to form an edge-lit backlight module 200.

In the embodiments of the present disclosure, the light-emitting element 202 may be a semiconductor light-emitting device, such as a light-emitting diode.

According to embodiments of the present disclosure, as shown in FIG. 5, a display screen is provided. The display screen comprises the backlight module 200 according to any one of the above embodiments.

In the embodiments of the present disclosure, the display screen further comprises a color filter 302 stacked on the backlight module 200.

In the embodiments of the present disclosure, a pattern is printed or etched on the color filter 302. When the color filter 302 is stacked on the backlight module 200, the backlight module 200 is capable of providing a light source for the color filter 302 to illuminate the pattern on the color filter 302, realizing display.

In the embodiments of the present disclosure, the pattern printed or etched on the color filter 302 is associated with a predetermined display content on the display screen, and may be printed or etched as desired. A description of the specific pattern is omitted herein.

In any one of the above embodiments of the present disclosure, the display screen further comprises at least two touch controls 304 corresponding in one-to-one way to the at least two backlight regions 104 of the backlight module.

In the embodiments of the present disclosure, since the at least two touch controls 304 correspond in one-to-one way to the at least two backlight regions 104, it is convenient for the user to realize the selection of a function corresponding to the backlight region 104 through a touch control operation on the touch controls 304, i.e., realize touch control of the display screen.

In some embodiments of the present disclosure, each of the at least two touch controls 304 may be a touch capacitor, and details thereof are omitted herein.

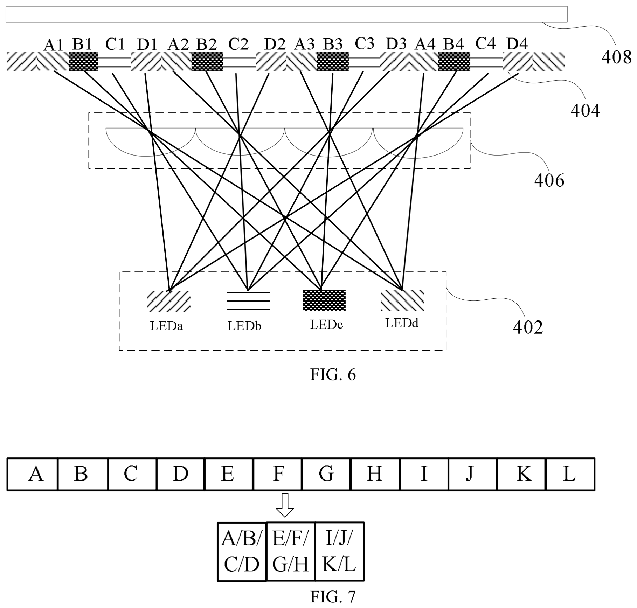

According to embodiments of the present disclosure, as shown in FIG. 6, a display module is provided. The display module comprises at least two light-emitting sources 402, a color filter sheet 404, and a grating sheet 406. A plurality of patterns are distributed on the color filter sheet 404, and are pieced together to form at least two combined patterns. The grating sheet 406 is located between the at least two light-emitting sources 402 and the color filter sheet 404. When a target light-emitting source 402 of the at least two light-emitting sources 402 operates, emitted lights are refracted by the grating sheet 406 and then irradiate the color filter sheet 404, and thus a target pattern of the at least two combined patterns is displayed after being irradiated.

In the display module according to the embodiments of the present disclosure, different combined patterns may be displayed by one color filter sheet, and accordingly more contents may be displayed with a limited display size, to solve problems in related technical solutions where an excessive number of function options lead to a large number of blocks of the color filter, a large area of the color filter, and high space occupancy, which would otherwise provide poor interactive experience.

The display module is used for a display panel of a household appliance, and the display panel may also be a touch control panel for realizing the display and touch control.

Embodiments of the present disclosure is implemented based on the following principle. In an exemplary embodiment of the present disclosure, when different light-emitting sources 402 operate, emitted lights from the different light-emitting sources 402 are refracted by the grating sheet 406 and then irradiate different positions on the color filter sheet 404. When the lights irradiate the color filter, patterns at the illuminated positions on the color filter sheet 404 are lit up, and the lit patterns may form combined patterns. Each combined pattern is used to represent one function option.

It can be seen from the above that as the number of light-emitting sources 402 increases and the number of patterns provided on the color filter sheet 404 increases, the display module according to the embodiments of the present disclosure may display more function options. Therefore, it is possible to realize display of more function options without increasing the display size, or reduce the display size while ensuring the number of displayed function options, to satisfy display requirements in different use scenarios.

In the embodiments of the present disclosure, the grating sheet 406 is capable of changing a light exit direction of the light incident into the grating sheet 406. While realizing light concentration, patterns at the different positions on the color filter sheet 404 may be selectively illuminated, which in turn can realize that the combined pattern is obtained by combining the patterns at different positions.

In the embodiments of the present disclosure, the at least two light-emitting sources 402 are arranged at intervals. The patterns on the color filter sheet 404 are sequentially arranged. An arrangement direction of the at least two light-emitting sources 402 is the same as an arrangement direction of the patterns on the color filter sheet 404. The grating sheet 406 is located between the at least two light-emitting sources 402 and the color filter sheet 404.

In the embodiments of the present disclosure, the grating sheet 406 comprises at least two lenses, and the at least two lenses, the at least two light-emitting sources 402, and the at least two combined patterns correspond in one-to-one way to one another.

In the embodiments of the present disclosure, a specific composition of the grating sheet 406 is defined. By defining the lenses contained in the grating sheet 406 to correspond in one-to-one way to the at least two light-emitting sources 402 and the combined patterns formed by piecing the patterns, during actual use, one of the at least two light-emitting sources 402 may be controlled to operate while the others are controlled not to operate, to realize display of one combined pattern of the at least two combined patterns.

In the embodiments of the present disclosure, the at least two lenses and the at least two light-emitting sources 402 may be understood as positions of the at least two lenses corresponding in one-to-one way to positions of the at least two light-emitting sources. In this way, when one of the at least two light-emitting sources 402 emits lights, the lights can be refracted by the at least two lenses and then irradiate a corresponding position on the color filter sheet 404. After the pattern at the corresponding position on the color filter sheet 404 are lit up, the patterns may be combined to form a combined pattern.

In the embodiments of the present disclosure, the function option may be selected as desired, and its corresponding light-emitting source 402 may be controlled to emit lights to display the desired function option.

As shown in FIG. 7, for example, patterns arranged on the color filter sheet 404 comprise A, B, C, D, E, F, G, H, I, J, K, and L. A, B, C, and D may be displayed at one position, such as a first position. E, F, G, and H may be displayed at another position, such as a second position. I, J, K, and L may be displayed at one position, such as a third position.

Relative positions among the first position, the second position, and the third position are fixed, and different combined patterns are formed when different patterns are displayed at the first position, the second position, and the third position.

For example, the patterns arranged on the color filter sheet 404 may comprise A1, B1, C1, D1, A2, B2, C2, D2, A3, B3, C3, D3, A4, B4, C4, D4 sequentially.

When a first light-emitting source 402 LEDa of the at least two light-emitting sources 402 emits lights, the patterns D1, D2, D3, and D4 are illuminated. At this time, a combined pattern D is formed by D1, D2, D3, and D4.

Similarly, when a second light-emitting source 402 LEDb of the at least two light-emitting sources 402 emits lights, the patterns C1, C2, C3, and C4 are illuminated. At this time, a combined pattern C is formed by C1, C2, C3, and C4.

By extension, when a third light-emitting source 402 LEDc of the at least two light-emitting sources 402 emits lights, the patterns B1, B2, B3, and B4 are illuminated. At this time, a combined pattern B is formed by B1, B2, B3, and B4.

When a fourth light-emitting source 402 LEDd of the at least two light-emitting sources 402 emits lights, the patterns A1, A2, A3, and A4 are illuminated. At this time, a combined pattern A is formed byA1, A2, A3, and A4.

In one of the embodiments, the color filter sheet 404 is either attached to the grating sheet 406 or fixed to the grating sheet 406 by using a plastic frame.

In any one of the above embodiments of the present disclosure, the lens comprises a film with a circular protrusion at one side of the film, and circular protrusions of any two films have the same orientation.

In the embodiments of the present disclosure, the form of the lens is specifically defined. In this case, by defining the lens to be the film with the circular protrusion at one side of the film and replacing a glass lens with such a lens, the use of the glass lens is reduced while realizing the light refraction. Therefore, a volume and weight of the display module can be reduced, achieving lightweight of the display module.

In some embodiments of the present disclosure, the film may be a thermoplastic polyester film.

In the embodiments of the present disclosure, by defining the circular protrusions of any two films to have the same orientation, at least two films are integrated. Therefore, during the assembly of the display module, assembly difficulty of the display module is reduced.

In the embodiments of the present disclosure, the circular protrusion faces towards a side of the light-emitting source 402.

In the embodiments of the present disclosure, by defining the circular protrusion to face towards the side of the light-emitting source, a side facing away from the circular protrusion may be form as a relatively flat array and is arranged to face towards the color filter sheet.

In addition, since the circular protrusion faces towards the side of the light-emitting source, a focal point of the grating sheet may be easily set at a side of the color filter sheet, achieving uniform light emission.

In any one of the above embodiments of the present disclosure, the at least two light-emitting sources 402 comprise a plurality of groups of light-emitting units, and each of the at least two light-emitting sources 402 comprises at least one group of light-emitting units. Two adjacent light-emitting units of the plurality of groups of light-emitting units are arranged at intervals.

In the embodiments of the present disclosure, structures of the at least two light-emitting sources 402 are defined. In the embodiments of the present disclosure, the plurality of groups of light-emitting units may be divided into groups to form different light-emitting sources 402. In this case, an existing light-emitting matrix may be divided to obtain a plurality of groups of light-emitting units, to realize centralized control on the at least two light-emitting sources 402, simplifying control cost of the display module.

In the embodiments of the present disclosure, by arranging two adjacent light-emitting units at intervals, interference caused by lights emitted by the different light-emitting sources during their operation is reduced, to improve a display effect of the combined pattern.

In some embodiments of the present disclosure, the number of groups of light-emitting units contained in the different light-emitting sources 402 is the same.

In the embodiments of the present disclosure, by defining the number of groups of light-emitting units contained in the different light-emitting sources 402 to be the same, the lights emitted by the different light-emitting sources 402 are nearly the same, ensuring that brightness of the displayed combined patterns is similar, to ensure user experience of the display module.

In any one of the above embodiments of the present disclosure, a thickness of the color filter sheet 404 ranges from 0.1 mm to 0.3 mm; and/or a thickness of the grating sheet 406 ranges from 0.2 mm to 0.6 mm; and/or a distance between the at least two light-emitting sources 402 and the grating sheet 406 ranges from 5 mm to 20 mm.

In the embodiments of the present disclosure, a plurality of patterns are distributed on the color filter sheet 404. By defining the thickness of the color filter sheet 404 to be greater than or equal to 0.1 mm, the color filter sheet 404 is prevented from being easily deformed due to its excessively small thickness, which would otherwise reduce its mechanical strength and result in easy damage of the display module. By defining the thickness of the color filter sheet 404 to be smaller than or equal to 0.3 mm, manufacturing cost of the display module are prevented from increasing due to an excessively thick color filter sheet.

By defining the thickness of the grating sheet 406 to range from 0.2 mm to 0.6 mm, it is possible to avoid the restriction that the size of the color filter sheet from becoming excessively large due to an excessively thin grating sheet, to prevent the display module from becoming excessively thick caused by an excessively thick grating sheet.

Similarly, when the distance between the at least two light-emitting sources 402 and the grating sheet 406 is smaller than 5 mm, the size of the color filter sheet 404 is restricted from being excessively large; whereas when the distance between the at least two light-emitting sources 402 and the grating sheet 406 is greater than 20 mm, the display module becomes excessively thick.

In some embodiments of the present disclosure, the light-emitting unit comprises a light-emitting diode.

In any one of the above embodiments of the present disclosure, the display module further comprises a diffuser sheet 408. The diffuser sheet 408 is stacked on the color filter sheet 404, and is located at a side away from the grating sheet 406.

In the embodiments of the present disclosure, the diffuser sheet 408 is provided to perform a light homogenization operation on the lights diffused from the combined pattern, making the displayed combined patterns softer and further ensuring a viewing experience of the display module.

In some embodiments of the present disclosure, the diffuser sheet 408 may be any one of a diffuser sheet 408 made of polyethylene glycol terephthalate (PET), a diffuser sheet 408 made of polycarbonate (PC), or a diffuser sheet 408 made of polymethyl methacrylate (PMMA).

In some embodiments of the present disclosure, the diffuser sheet 408 is either attached to the color filter sheet 404, fixed to the color filter sheet 404 using a plastic frame, or formed on the color filter sheet 404 through spraying.

According to embodiments of the present disclosure, a display panel is provided. The display panel comprises the display module according to any one of the above embodiments.

In the embodiments of the present disclosure, the display panel further comprises a touch control. The touch control is stacked on the color filter sheet of the display module.

In the embodiments of the present disclosure, the selection of a function option corresponding to the combined pattern is realized through the touch control operation on the touch control, i.e., touch control of the display module is realized.

In some embodiments of the present disclosure, the touch control may be located between the color filter sheet and the diffuser sheet.

In the embodiments of the present disclosure, by positioning the touch control between the color filter sheet and the diffuser sheet, direct contact between the user and the touch control is reduced, lowering a probability of touch failure of the display panel.

In some embodiments of the present disclosure, the touch control may also be located at a side of the diffuser sheet away from the color filter sheet.

In some embodiments of the present disclosure, the touch control may be the touch capacitor, and details thereof are omitted herein.

According to embodiments of the sixth aspect of the present disclosure, a household appliance is provided. The household appliance comprises: the light guide structure according to any one of the above embodiments; and/or the backlight module according to the above embodiments; and/or the display screen according to any one of the above embodiments; and/or the display module according to any one of the above embodiments; and/or the display panel according to any one of the above embodiments.

In any one of the above embodiments of the present disclosure, the household appliance comprises a water heater.

In some embodiments of the present disclosure, the household appliance comprises, but is not limited to, a dishwasher, a refrigerator, an air conditioner, or other appliances requiring display functionality.

In the description and claims of the present disclosure, the features associated with "first" and "second" may explicitly or implicitly comprise at least one of the features or more of the features. In the written description of the present disclosure, unless otherwise specified "plurality" means at least two. In addition, "and/or" throughout the specification and claims indicates at least one of the objects associated with "and/or". The character "/" generally indicates that the associated objects before and after the character are in an "or" relationship.

In the written description of the present disclosure, it should be understood that terms such as "center", "longitudinal", "lateral", "length", "width", "thickness", "up", "down", "front", "back", "left", "right", "vertical", "horizontal", "top", "bottom", "in", "out", "clockwise", "anti-clockwise", "axial", "radial" and "circumference" refer to the directions and location relations which are the directions and location relations shown in the drawings, and for describing the embodiments of the present disclosure and for describing in simple, and which are not intended to indicate or imply that the structure, the device, or the elements are arranged to locate at the specific directions or are structured and performed in the specific directions, which could not to be understood to the limitation of the present disclosure.

In the written description of the present disclosure, it can be understood that, unless otherwise clearly specified and limited, terms such as "mount", "connect", "couple", and the like should be understood in a broad sense. For example, it may be a fixed connection or a detachable connection or connection as one piece; a mechanical connection or an electrical connection; a direct connection or an indirect connection through an intermediate; or internal communication of two components. For those of ordinary skill in the art, the specific meaning of the above terms in the present disclosure should be understood according to specific circumstances.

In the claims, description, and accompanying drawings of the present disclosure, the term "plurality" referred to herein means two or more, unless explicitly specified otherwise. The terms such as "over", "below", and the like should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. The terms "connection", "mounting", and "fixation" shall be interpreted in a broad sense. For example, "connection" may be a fixed connection, a detachable connection, or an integral connection between a plurality of objects; it may be a direct connection between the plurality of objects, or an indirect connection between the plurality of objects through an intermediate medium. For those skilled in the art, the specific meaning of the above-mentioned terms in the present disclosure can be understood according to the above data.

In the claims, description, and accompanying drawings of the present disclosure, descriptions with reference to the terms "an embodiment", "some embodiments", "specific embodiments", or the like, mean that specific features, structure, materials or characteristics described in conjunction with the embodiment or example are comprised in at least one embodiment or example of the present disclosure. In the claims, description, and accompanying drawings of the present disclosure, the schematic representations of the above terms do not necessarily refer to the same embodiment or example. Moreover, the described specific features, structures, materials or characteristics may be combined in any one or more embodiments or examples in a suitable manner.

While exemplary embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A light guide structure, comprising:
a light guide plate having at least two backlight regions arranged at intervals in an extension direction of the light guide plate;
at least two light concentrators corresponding in one-to-one way to the at least two backlight regions and located in the at least two backlight regions; and
at least two light-shield components corresponding in one-to-one way to the at least two backlight regions and surrounding the at least two backlight regions.

2. The light guide structure according to claim 1, wherein each of the at least two backlight regions has a first operation surface and a second operation surface opposite to the first operation surface, the at least two light concentrators being arranged on the first operation surface and/or the second operation surface.

3. The light guide structure according to claim 1 or 2, wherein:
the light guide structure has a light-emitting element configured to be cooperatively used with the light guide structure, the light-emitting element having a light-emitting direction; and
each of the at least two light concentrators comprises a plurality of light concentration units sequentially arranged in the extension direction of the light guide plate, an extension direction of each of the plurality of light concentration units being the same as the light-emitting direction.

4. The light guide structure according to claim 3, wherein a length of each of the plurality of light concentration units in the extension direction of the light guide plate ranges from 0.2 mm to 0.5 mm.

5. The light guide structure according to claim 3 or 4, wherein the plurality of light concentration units are stacked on the light guide plate,
wherein a length of each of the plurality of light concentration units in a direction along which the plurality of light concentration units are stacked on the light guide plate ranges from 50 µm to 100 µm.

6. The light guide structure according to any one of claims 3 to 5, wherein the plurality of light concentration units are stacked on the light guide plate,
wherein a length of the light guide plate in a direction along which the plurality of light concentration units are stacked on the light guide plate ranges from 0.5 mm to 1 mm.

7. The light guide structure according to any one of claims 3 to 6, wherein each of the at least two light-shield components comprises:
a first shield member located between two adjacent backlight regions of the at least two backlight regions; and
second shield members arranged at two sides of each of the at least two backlight regions in the extension direction of each of the plurality of light concentration units.

8. The light guide structure according to claim 7, wherein a length of the first shield member in the extension direction of the light guide plate ranges from 1 mm to 5 mm.

9. The light guide structure according to claim 7 or 8, wherein a length of each of the second shield members in the extension direction of each of the plurality of light concentration units ranges from 1 mm to 3 mm.

10. A backlight module, comprising:
a light guide structure according to any one of claims 1 to 9.

11. The backlight module according to claim 10, further comprising a light-emitting element arranged to face towards a light guide plate of the light guide structure.

12. A display screen, comprising:
a backlight module according to claim 10 or 11.

13. The display screen according to claim 12, further comprising a color filter stacked on the backlight module.

14. The display screen according to claim 12 or 13, further comprising at least two touch controls corresponding in one-to-one way to at least two backlight regions of the backlight module.

15. A household appliance, comprising:
a light guide structure according to any one of claims 1 to 9; and/or a backlight module according to claim 10 or 11; and/or
a display screen according to any one of claims 12 to 14.
